# EUROPÄISCHE PATENTSCHRIFT

(11) **EP 0 342 386 B1**
(45) Veröffentlichungstag und Bekanntmachung des Hinweises auf die Patenterteilung: **30.03.1994**
(21) Anmeldenummer: 89107284.5
(22) Anmeldetag: 22.04.1989
(51) Int. Cl.: C08G 12/42, C08L 61/32, D21H 17/54

(54) **Verfahren zur Herstellung eines Mittels zum Tränken von cellulosehaltigen Faserstoffen**
Process for the preparation of a composition for impregnating cellulose containing fibre fabrics
Procédé de préparation d'une composition pour l'imprégnation de tissus en fibre contenant de la cellulose

(30) Priorität: 28.04.1988 DE 3814292
(43) Veröffentlichungstag der Anmeldung: 23.11.1989
(73) Patentinhaber: BASF Aktiengesellschaft, 67063 Ludwigshafen (DE)
(72) Erfinder: Busse, Gerd, D-6704 Mutterstadt (DE); Decher, Jakob, D-6712 Bobenheim-Roxheim (DE); Eisele, Wolfgang, Dr., D-6700 Ludwigshafen (DE); Haeussler, Edgar, D-6737 Boehl-Iggelheim (DE); Wittmann, Otto, D-6710 Frankenthal (DE)

(56) Entgegenhaltungen:
- EP-A- 0 262 518
- DE-A- 2 005 166
- FR-A- 1 566 965

## Beschreibung

Die Erfindung betrifft ein Verfahren zur Herstellung eines Mittels zum Tränken von cellulosehaltigen Faserstoffen auf der Grundlage einer wäßrigen Lösung eines zumindest partiell mit Alkohol veretherten Melamin-Formaldehyd-Kondensats als Tränkharz, das sich insbesondere zum Tranken von dicken Papieren mit hohem Flächengewicht eignet.

Es ist z.B. aus der DE-OS 20 05 166 bekannt, wasserlösliche veretherte Methylolmelamine unter Mitverwendung von einem 2- oder 3-wertigen Alkohol und einem einwertigen Alkohol herzustellen. Die Produkte dienen insbesondere zur Textilausrüstung, als Griff gebende Mittel bei der Ausrüstung von Materialien aus Synthesefasern und als Zusatzprodukte für Klebstoffe.

In der Schrift FR-A 1 566 965 wird die Herstellung von mit mehrwertigen höheren Alkoholen umgeetherten Melamin-Formaldehyd-Harzen, welche primär mit flüchtigen niederen Monoalkoholen verethert worden waren, beschrieben. Die Harze zeigen je nach Etherrest völlig voneinander verschiedene Eigenschaften. Einige von ihnen sind gut in Kohlenwasserstoffen löslich sowie mischbar mit Wachsen und finden in der Lackindustrie als Komponenten in Aufbrennlacken sowie zum Lufttrocknen von Lacken Verwendung. Die wasserlöslichen Produkte eignen sich als Plastifiziermittel bei Klebstoffen und Lacken.

Es ist aus DE-AS 19 32 528 und DE-OS 34 30 248 auch bekannt, wäßrige bzw. wäßrig alkalische Lösungen aus Melamin-Formaldehyd-Vorkondensaten zum Tränken von Papierbahnen zu verwenden, die nach dem Trocknen zu Schichtpreßstoffen verarbeitet oder zur Oberflächenvergütung von Holzwerkstoffen verwendet werden. Die Papierbahnen sind nicht sonderlich dick, meist ca. 0,1 mm dick, und werden einzeln oder durch Übereinanderlegen mehrerer Schichten weiterverarbeitet. Die Qualität der Tränkharze, die Vorgänge des Tränkens und die Methoden der Weiterverarbeitung sind zahlreich und haben bereits einen hohen Perfektionsgrad erreicht.

Schwieriger wird der Tränkprozeß, wenn dickere Papiere, z.B. solche mit Dicken von 0,1 bis 0,7 mm als Substrat herangezogen werden. Es ist leicht einzusehen, daß gegenläufige Forderungen, wie gründliche Penetration und Tränkgeschwindigkeit mit dicken Papieren schwerer zu erfüllen sind und daß besondere Maßnahmen erforderlich sind, um spaltfeste und elastische Produkte zu erhalten. Dafür setzt man im allgemeinen den Imprägnierflotten der marktüblichen Harze organische Lösemittel, z.B. Methanol, Ethanol oder Isopropanol zu, um eine gute und schnelle Penetration des Harzes in das Papier zu erreichen. Die Mitverwendung organischer Lösungsmittel hat u.a. die Nachteile, daß sie beim Trocknen die Abluft und die Umwelt belasten und zudem verlorene Einsatzstoffe darstellen.

Der vorliegenden Erfindung lag die Aufgabe zugrunde, ein Verfahren zur Herstellung eines Mittels zum Tränken von cellulosehaltigen Faserstoffen aufzuzeigen, das sich auch ohne die Mitverwendung organischer Lösungsmittel wie Alkoholen zum Tränken dickerer Trägerstoffe, insbesondere dickerer Papiere eignet und dennoch eine gute Penetration des Tränkharzes in das Papier bei üblicher Durchlaufgeschwindigkeit gibt, eine geringe Quellung des Papiers bewirkt bei guter Haftung zum Trägermaterial, ferner eine Spaltfestigkeit und ausreichende Elastizität des getränkten Papiers bei guter Planlage gibt sowie ein gutes Lackstehvermögen und ein hinreichendes Potlife der Imprägnierflotten aufweist.

Es wurde nun gefunden, daß die nach dem erfindungsgemäßen Verfahren hergestellten Mittel zum Tränken von cellulosehaltigen Faserstoffen auf der Grundlage einer wäßrigen Lösung eines zumindest partiell mit Alkohol veretherten Melamin-Formaldehyd-Kondensats die gestellte Aufgabe weitgehend erfüllen, wenn die wäßrige Lösung
aus einer Lösung, welche maximal 50 Gew.-%, bezogen auf die Harzmenge, an Wasser aufnimmt, ohne zwei Phasen zu bilden, eines durch Umsetzung seiner alkalischen wäßrigen Lösung mit Methanol veretherten Formaldehyd-Melamin-Kondensats, bei dem 4,5 bis 6 Wasserstoffatome des Melamins durch N-Methoxymethylgruppen substituiert sind,
durch Umsetzen mit mindestens 1 Mol, insbesondere 1 bis 5 Mol (pro Mol Melamin des Kondensats) eines wasserlöslichen 2- oder 3-wertigen Alkohols (B) bei etwa 50 bis 100°C, bei einem sauren pH-Wert, bevorzugt bei einem pH-Wert von etwa 3,0 bis 6,5 und insbesondere 3,5 bis 5,0 bis zur Entstehung eines unbegrenzt wassermischbaren Zustandes der Lösung, in dem das Harz mit Wasser in jedem Mischungsverhältnis eine klare Lösung bildet, hergestellt ist.

Beim erfindungsgemäßen Verfahren werden die Mittel zum Tränken von cellulosehaltigen Faserstoffen somit durch Überführen einer wasserunverträglichen oder nur begrenzt wasserverträglichen wäßrig-alkoholischen Lösung eines (teil)veretherten Melamin-Formaldehyd-Kondensats (A) in eine unbegrenzt wassermischbare oder vollkommen wasserverträgliche Lösung hergestellt, was durch Umsetzen mit einem 2- und/oder 3-wertigen wasserlöslichen Alkohol unter Erwärmen bei saurem pH-Wert der Reaktionslösung erfolgt.

Die Ausgangslösung des veretherten Melamin-Formaldehyd-Kondensats (A) kann in an sich bekannter Weise hergestellt werden, z.B. durch Kondensation von 1 Mol Melamin mit mindestens 4,5 Molen, bevorzugt 5 bis 10 Molen Formaldehyd in alkalischer wäßriger Lösung und anschließendes ein- oder mehrmaliges Verethern der Methylolgruppen des Kondensats mit zugefügtem überschüssigem Methanol, z.B. 10 Mol Methanol pro Mol Melamin, im sauren Milieu, z.B. bei einem pH-Wert von 4 bis 6,5. Nach teilweisem Abdestillieren des jeweiligen Alkohol-Wasser-Gemisches resultiert ein wasserunverträgliches Produkt oder ein Produkt, das nur begrenzt wasserverträglich ist, d.h. maximal 50 Gew.-%, bezogen auf die Harzmenge an Wasser aufnimmt, ohne zwei Phasen zu bilden.

Sehr geeignete mit Alkohol veretherte Melamin-Formaldehyd-Kondensate (A) sind veretherte N-Methylol-melamine mit im Schnitt 4,5 bis 6 N-Methylolgruppen vor der Veretherung und insbesondere Melaminderivate, bei denen im Schnitt 4,5 bis 6 Wasserstoffatome an den N-Atomen durch N-Methoxymethyl-Gruppen substituiert sind. Sehr bewährt hat sich Hexakismethoxymethylmelamin.

Die Viskosität der wäßrig-alkoholischen Lösung des veretherten Ausgangskondensats (A) liegt vorteilhaft bei 2500 bis 7000 mPa.s, insbesondere bei etwa 3000 bis 5000 mPa^{.}s, gemessen an einer ca. 95 %igen Lösung (95 % nicht-flüchtige Anteile) nach DIN 53 018 (Rotationsviskosimeter)

Die Umsetzung der veretherten Kondensatlösung mit 2- und/oder 3-wertigem Alkohol (A) erfolgt unter Erwärmen der wäßrig-alkoholischen Lösung auf im allgemeinen etwa 50 bis 100°C und bevorzugt 70 bis 95°C bei einem sauren pH-Wert der Lösung, bevorzugt bei einem pH-Wert von etwa 3,0 bis 6,5 und insbesondere 3,5 bis 5, wobei dieser durch Zusatz einer anorganischen Säure wie Salz-, Schwefel- oder Phosphorsäure oder bevorzugt einer organischen Säure, insbesondere einer Dicarbonsäure wie Maleinsäure und bevorzugt Oxalsäure eingestellt wird. Zuletzt muß eine Temperatur erreicht werden, bei der der niedere Monoalkohol abgezogen wird.

Als wasserlösliche 2- oder 3-wertige Alkohole (B) eignen sich für die Umsetzung besonders wasserlösliche Alkohole mit 2 bis 6 C-Atomen und bevorzugt Ethylenglykol, Di- und Triethylenglykol sowie Glyzerin. Doch eignen sich auch andere wasserlösliche Glykole, z.B. Polyethylenglykole, oder Triole, die bei der Umsetzung die Harzlösung in einen unbegrenzt wassermischbaren Zustand überführen. Die Menge an Polyalkohol (B) für die Umsetzung beträgt mindestens 1 Mol pro Mol Melamin im umzusetzenden Tränkharz (A) der Lösung und vorteilhaft 1 bis 5 Mol pro Mol Melamin. Die Umsetzung wird mit Vorteil unter Rühren und so lange durchgeführt, bis die anfängliche Wasserunverträglichkeit oder nur begrenzte Wasserverträglichkeit in eine unbegrenzte Wassermischbarkeit bzw. volle Wasserverdünnbarkeit übergegangen ist, was im allgemeinen nach etwa 2 bis 5 Stunden erfolgt ist.

Der unbegrenzt wassermischbare Zustand der Tränkharzlösung ist dabei in dem Zeitpunkt erreicht, wenn das Harz mit Wasser in jedem Mischungsverhältnis eine klare Lösung bildet.

Nach Erreichen der unbegrenzten Wasserverdünnbarkeit läßt man die Tränkharzlösung abkühlen. Die resultierende Tränkharzlösung zeigt nach der Umsetzung gegenüber der Ausgangslösung eine klar erniedrigte Viskosität, die oft nur bei 1/4 bis 2/3 des Viskositätswertes der Ausgangslösung (in mPa.s) liegt.

Die nach dem erfindungsgemäßen Verfahren hergestellten wäßrigen Aminoplastlösungen enthalten keine zugesetzten organischen Lösungsmittel wie Monoalkohole und stellen bei der Anwendung daher keine Umweltbelastung dar.

Für manche Anwendung kann dem Mittel mit Vorteil Netzmittel, meist in einer Menge unter 1 Gew.-%, zugesetzt werden, z.B. Fettalkoholethoxylat oder Alkylphenolethoxylat oder Mischungen derselben.

Vorteilhaft enthält das Mittel in Form der zu verwendenden Imprägnierflotte ferner ein zugesetztes sauer wirkendes Härtungsmittel bekannter Art, wie Säuren, in der Hitze spaltbare Ammoniak- oder Aminsalze, von denen p-Toluolsulfonsäure und deren Aminsalze, bevorzugt Mischungen aus Morpholin und p-Toluolsulfonsäure sich als besonders vorteilhaft erwiesen haben.

Vorteilhafte Mittel in Form der Imprägnierflotte enthalten auf 100 Gew. - Teile des Tränkharzes (ca. 80 gew.-%ig) 0-100 Gew.-Teile Wasser, 3-6 Gew.-Teile p-Toluolsulfonsäure (50 %ig) und 0,2 bis 0,6 Gew.-Teile Netzmittel.

Zur Erhöhung des Potlifes können den Mitteln bzw. den Imprägnierflotten auch bis zu 2, bevorzugt 0,1 bis zu 1 Gew.-% an Magnesiumchlorid zugesetzt werden.

Insbesondere zur Verbesserung des Lackstehvermögens und der Elastizität ist es oft auch vorteilhaft, den nach dem erfindungsgemäßen Verfahren hergestellten Mitteln eine wäßrige Dispersion eines Polymerisats oder Copolymerisats eines Acryl- oder Methacrylsäureesters, bevorzugt in Mengen von bis zu 10 Gew.-% des Mittels, zuzusetzen bzw. unterzumischen, z.B. ein Copolymerisat auf Basis von n-Butylacrylat, Acrylnitril, Methacrylsäure und Methacrylamid.

Bei der Verwendung der nach dem erfindungsgemäßen Verfahren hergestellten Mittel weisen die Imprägnierflotten vorteilhaft einen pH-Wert von 3 bis 6 auf.

Die erfindungsgemäßen Aminoplastlösungen erlauben eine vorteilhafte Imprägnierung auch dicker Papiere ohne den sonst üblichen Zusatz von Alkoholen wie Isopropanol oder von anderen organischen Lösungsmitteln bei guter gleichbleibender Qualität der hergestellten Kantenfilme. Damit hergestellte Möbelkanten sind elastisch, haben eine geringe Papierquellung und sind auch spaltfest. Bei der Verarbeitung der erfindungsgemäßen Tränkmittel ist keine Umweltbelastung durch organische Lösungsmittel gegeben, auch ist die Abgabemenge an Formaldehyd reduziert. Der Verarbeiter kann somit auf eine Abgasreinigung und eine Nachverbrennungsanlage verzichten.

Weitere Vorteile der Erfindung zeigen die nachstehenden Beispiele auf, die die Erfindung weiter beschreiben, ohne sie zu beschränken. Die darin angegebenen Teile und Prozente beziehen sich, soweit nicht anders angegeben, auf das Gewicht.

### Beispiel 1

In einem 2-Liter-Dreihalskolben mit Rührer, Thermometer und Rückflußkühler wurden 400 g (1,14 Mol bezogen auf Melamin) von technischem Hexakismethoxymethylmelamin mit einem Molverhältnis von Melamin : Formaldehyd : Methoxylgruppen = 1 : 5,7 : 5,2 (Viskosität: 4000 mPa.s) mit 150 g (1,41 Mol) Diethylenglykol versetzt. Nach Zugabe von 0,2 g Oxalsäure wurde die Mischung auf 90°C aufgeheizt. Dabei stellte sich ein pH-Wert von 4,2 ein.

Der Reaktionsansatz wurde bei 90°C solange gerührt, bis die anfängliche Wasserunverträglichkeit in eine volle Wasserverdünnbarkeit übergegangen war. Hierfür waren 1 - 2 Stunden erforderlich. Nach Erreichen der Wasserverdünnbarkeit wurde das Reaktionsgemisch auf Zimmertemperatur abgekühlt.

Man erhielt 550 g einer erfindungsgemäßen Tränkharzlösung mit nachstehenden Eigenschaften: Nichtflüchtige Anteile (2 g Probe, 2 h bei 125°C getrocknet): 82,1 %; Viskosität: 740 mPa.s; Wasserverdünnbarkeit: 1 : ∞.

### Beispiel 2

In einem 2-Liter-Dreihalskolben mit Rührer, Thermometer und Rückflußkühler wurden 400 g (1,14 Mol bezogen auf Melamin) von technischem Hexakismethoxymethylmelamin mit einem Molverhältnis von Melamin : Formaldehyd Methoxylgruppen = 1 : 5,7 : 5,2 (Viskosität: 4320 mPa.s) mit 150 g (1,23 Mol) Triethylenglykol versetzt und nach Zugabe von 0,2 g Oxalsäure auf 90°C aufgeheizt.

Der Reaktionsansatz wurde bei 90°C solange gerührt, bis die anfängliche Wasserunverträglichkeit in eine volle Wasserverdünnbarkeit übergegangen war. Hierfür waren 4 Stunden erforderlich. Nach Erreichen der Wasserverdünnbarkeit wurde das Reaktionsgemisch auf Zimmertemperatur abgekühlt.

Man erhielt 550 g einer erfindungsgemäßen Tränkharzlösung mit nachstehenden Eigenschaften: Nichtflüchtige Anteile (2 g Probe, 2 h bei 125°C getrocknet): 82,2 %; Viskosität: 210 mPa.s; Wasserverdünnbarkeit: 1 : ∞.

### Beispiel 3

In einem 2-Liter-Dreihalskolben mit Rührer, Thermometer und Rückflußkühler wurden 400 g (1,14 Mol bezogen auf Melamin) von technischem Hexakismethoxymethylmelamin mit einem Molverhältnis von Melamin : Formaldehyd : Methoxylgruppen = 1 : 5,7 : 5,2 (Viskosität: 4500 mPa.s) mit 150 g (1,65 Mol) Glycerin versetzt und nach Zugabe von 0,2 g Oxalsäure auf 90°C aufgeheizt.

Der Ansatz wurde bei 90°C solange gerührt, bis die anfängliche Wasserunverträglichkeit in eine volle Wasserverdünnbarkeit übergegangen war. Hierfür waren 4 Stunden erforderlich. Nach Erreichung der Wasserverdünnbarkeit wurde das Reaktionsgemisch auf Zimmertemperatur abgekühlt.

Man erhielt 550 g einer erfindungsgemäßen Tränkharzlösung mit nachstehenden Eigenschaften: Nichflüchtige Anteile (2 g Probe, 2 h bei 125°C getrocknet): 75,2 %; Viskosität: 250 mPa.s; Wasserverdünnbarkeit: 1 : ∞.

### Anwendungsbeispiel 1

Eine Mischung von 100 Teilen der gemäß Beispiel 2 hergestellten Harzlösung, 3 Teilen einer Mischung aus Morpholin und p-Toluolsulfonsäure (Gewichtsverhältnis 1 : 1) und 0,4 Teilen einer Netzmittellösung (®Kauropal 930/931 im Mischungsverhältnis 2 : 1) hatte einen pH-wert von 3,8. Die Gelierzeit betrug 5 Minuten. Die Tränkviskosität lag bei 13 Sek. Auslaufzeit im 4 mm-DIN-Becher bei 25°C. Das Potlife der Imprägnierflotte betrug mindestens 24 Stunden.

Mit der obengenannten Mischung wurden 150-280 g/m² schwere Kantenpapiere imprägniert. Das Papier wird auf etwa 50 % beharzt, d.h. auf ein Endgewicht von 225 bzw. 420 g/m² gebracht. Der VC-Wert (Restfeuchte) wird dabei auf 2-4 % eingestellt.

Die erhaltenen Kanten haben in Wasser eine Dickenquellung von 13 und lassen sich über einen Dorn bis ca. 6 mm ohne Bruch biegen.

### Anwendungsbeispiele 2 und 3

Vergleichend werden zum Tränken von Papier Tränkmittel mit einem erfindungsgemäß verwandten Harz gemäß Beispiel 1 (Anwendungsbeispiel 2 sowie Anwendungsbeispiel 3 (unter Zusatz einer handelsüblichen Acrylatdispersion)), und ohne Zusatz von organischen Lösungsmitteln verwandt. Die Tränkmittel und die Eigenschaften der getränkten Papiere zeigt die nachstehende Tabelle.

Die Penetrationszeit wurde bestimmt als die Zeit, die beim Auflegen eines schwarzen Papiervlieses (120 g/m², 40 mm Durchmesser) auf die Imprägnierflotte (Tränkmittel) bis zur völligen Benetzung verstrich.

Die Papierquellung in % wurde bestimmt, indem nach 24 Stunden Lagerung in Wasser die Dickenquellung mit einer Mikrometerschraube gemessen wurde.

Die Elastizität wurde durch Biegen des getrockneten Films um Dorne mit abnehmendem Durchmesser ermittelt bis der Film bricht.

Die Spaltfestigkeit wurde in einem manuellen Schertest der imprägnierten Folien ermittelt. Bruch senkrecht zur Oberfläche: gut, Bruch parallel zur Oberfläche: schlecht.

Die Tabelle zeigt, daß die erfindungsgemäßen Tränkmittel befriedigende Eigenschaften zeigen. Setzt man eine Acrylatdisperson zu (Anw.Beispiel 3) wird ein besonders gutes sog. Lackstehvermögen erzielt, d.h. ein Lackanstrich auf der Folie sinkt nicht ein.

**Tabelle**

| | Anw. Beispiel 2 | Anw. Beispiel 3 |
|---|---|---|
| Org. Lösungsmittel | ohne | ohne |
| Tränkmittel | 100 Teile | 100 Teile |
| | Harz gem. Beispiel 1 | |
| | 80 Teile Wasser | 80 Teile Wasser |
| | | 10 Teile ®Kauropal 938 |
| | 4,5 Teile | 4,5 Teile |
| | p-Toluolsulfonsäure als 50 % wäßrige Lösung | |
| | 0,6 Teile | 0,5 Teile |
| | Mischung aus 2 Teilen ®Kauropal 930, 1 Teil ®Kauropal 931, 7 Teilen Wasser | |
| Penetrationszeit (sec) | 10 | 10 |
| Papierquellung (%) | 13 | 13 |
| Elastizität: Bruch bei ... mm | 5 | 5 |
| Spaltfestigkeit | gut | gut |

## Patentansprüche (Patentansprüche für folgende(n) Vertragsstaat(en): AT, BE, CH, DE, FR, GB, IT, LI, NL, SE)

1. Verfahren zur Herstellung eines Mittels zum Tränken von cellulosehaltigen Faserstoffen auf der Grundlage einer wäßrigen Lösung eines zumindest partiell mit Alkohol veretherten Melamin-Formaldehyd-Kondensats, dadurch gekennzeichnet, daß man
A - eine Lösung, welche maximal 50 Gew.-%, bezogen auf die Harzmenge, an Wasser aufnimmt, ohne zwei Phasen zu bilden, eines durch Umsetzung seiner alkalischen wäßrigen Lösung mit Methanol veretherten Formaldehyd-Melamin-Kondensats, bei dem 4,5 bis 6 Wasserstoffatome des Melamins durch N-Methoxymethylgruppen substituiert sind, mit
B - mindestens 1 Mol, pro Mol Melamin des Kondensats, eines wasserlöslichen 2- oder 3-wertigen Alkohols bei 50 bis 100°C bei einem sauren pH-Wert bis zur Entstehung eines unbegrenzt wassermischbaren Zustandes der Lösung, in dem das Harz mit Wasser in jedem Mischungsverhältnis eine klare Lösung bildet, umsetzt.

2. Verfahren nach Anspruch 1, dadurch gekennzeichnet, daß die Umsetzung der Lösung des Kondensats (A) mit Ethylenglykol, Diethylenglykol, Triethylenglykol oder Glycerin als Alkohol (B) erfolgt.

3. Verfahren nach Anspruch 1, dadurch gekennzeichnet, daß die Umsetzung mit dem Alkohol (B) bei einem sauren pH-Wert von 3,0 bis 6,5 erfolgt.

4. Verfahren nach einem der Ansprüche 1 bis 3, dadurch gekennzeichnet, daß dem nach Anspruch 1 hergestellten Mittel ein Netzmittel zugesetzt wird.

5. Verfahren nach einem der Ansprüche 1 bis 4, dadurch gekennzeichnet, daß dem nach Anspruch 1 hergestellten Mittel nach ein sauer wirkendes Aminoplast-Härtungsmittel zugesetzt wird.

6. Verfahren nach einem der Ansprüche 1 bis 5, dadurch gekennzeichnet, daß dem nach Anspruch 1 hergestellten Mittel noch Magnesiumchlorid zur Erhöhung seines Potlife zugesetzt wird, so daß das Mittel bis zu 2 Gew.-% Magnesiumchlorid enthält.

7. Verfahren nach einem der Ansprüche 1 bis 6, dadurch gekennzeichnet, daß dem nach Anspruch 1 hergestellten Mittel noch eine wäßrige Dispersion eines Acryl- oder Methacrylsäureester-Polymerisats oder -Copolymerisats zugemischt werden.

8. Verfahren zum Tränken von cellulosehaltigen Faserstoffen wie Papier, dadurch gekennzeichnet, daß man dafür ein gemäß einem der Ansprüche 1 bis 7 hergestelltes Tränkmittel verwendet.

## Patentansprüche (Patentansprüche für folgende(n) Vertragsstaat(en): ES)

1. Verfahren zur Herstellung eines Mittels zum Tränken von cellulosehaltigen Faserstoffen auf der Grundlage einer wäßrigen Lösung eines zumindest partiell mit Alkohol veretherten Melamin-Formaldehyd-Kondensats als Tränkharz, dadurch gekennzeichnet, daß man eine Losung, welche maximal 50 Gew.-%, bezogen auf die Harzmenge, an Wasser aufnimmt ohne zwei Phasen zu bilden, eines durch Umsetzung seiner alkalischen wäßrigen Lösung mit Methanol veretherten Formaldehyd-Melamin-Kondensats (A), bei dem 4,5 bis 6 Wasserstoffatome des Melamins durch N-Methoxymethylgruppen substituiert sind, mit mindestens 1 Mol, pro Mol des Kondensats, eines wasserlöslichen 2- oder 3-wertigen Alkohols (B) bei 50 bis 100°C bei einem sauren pH-Wert bis zur Entstehung eines unbegrenzt wassermischbaren Zustandes der Lösung, in dem das Harz mit Nasser in jedem Mischungsverhältnis eine klare Lösung bildet, umsetzt.

2. Verfahren nach Anspruch 1, dadurch gekennzeichnet, daß die Umsetzung der Lösung des Kondensats (A) mit Ethylenglykol, Diethylenglykol, Triethylenglykol oder Glycerin als Alkohol (B) erfolgt.

3. Verfahren nach Anspruch 1, dadurch gekennzeichnet, daß die Umsetzung mit dem Alkohol (B) bei einem sauren pH-wert von 3,0 bis 6,5 erfolgt.

4. Verfahren nach einem der Ansprüche 1 bis 3, dadurch gekennzeichnet, daß dem nach Anspruch 1 hergestellten Mittel noch ein Netzmittel zugesetzt wird.

5. Verfahren nach einem der Ansprüche 1 bis 4, dadurch gekennzeichnet, daß dem nach Anspruch 1 hergestellten Mittel noch ein sauer wirkendes Aminoplast-Härtungsmittel zugesetzt wird.

6. Verfahren nach einem der Ansprüche 1 bis 5, dadurch gekennzeichnet, daß dem nach Anspruch 1 hergestellten Mittel noch Magnesiumchlorid zur Erhöhung seines Potlife zugesetzt wird, so daß das Mittel bis zu 2 Gew.-% Magnesiumchlorid enthält.

7. Verfahren nach einem der Ansprüche 1 bis 6, dadurch gekennzeichnet, daß dem nach Anspruch 1 hergestellten Mittel noch eine wäßrige Dispersion eines Acryl- oder Methacrylsäureester-Polymerisats oder -Copolymerisats zugemischt wird.

8. Verfahren zum Tränken von cellulosehaltigen Faserstoffen wie Papier, dadurch gekennzeichnet, daß man dafür ein gemäß einem der Ansprüche 1 bis 7 hergestelltes Tränkmittel verwendet.

## Claims (Claims for the following Contracting State(s): AT, BE, CH, DE, FR, GB, IT, LI, NL, SE)

1. A process for the preparation of an agent for impregnating cellulose-containing fibers on the basis of an aqueous solution of a melamine/formaldehyde condensate at least partially etherified with alcohol, which comprises reacting
A - a solution, which takes up not more than 50% by weight, based on the amount of resin, of water without forming two phases, of a formaldehyde/melamine condensate which is etherified by reacting its alkaline aqueous solution with methanol and in which from 4.5 to 6 hydrogen atoms of the melamine are substituted by N-methoxymethyl groups, with
B - at least 1 mol, per mole of melamine of the condensate, of a water-soluble dihydric or trihydric alcohol at from 50 to 100°C at an acidic pH until the formation of an infinitely water-miscible state of the solution in which the resin forms a clear solution with water in any mixing ratio.

2. A process as claimed in claim 1, wherein the solution of the condensate (A) is reacted with ethylene glycol, diethylene glycol, triethylene glycol or glycerol as the alcohol (B).

3. A process as claimed in claim 1, wherein the reaction with the alcohol (B) is effected at an acidic pH of from 3.0 to 6.5.

4. A process as claimed in any of claims 1 to 3, wherein a wetting agent is added to the agent prepared as claimed in claim 1.

5. A process as claimed in any of claims 1 to 4, wherein an acidic aminoplast curing agent is added to the agent prepared as claimed in claim 1.

6. A process as claimed in any of claims 1 to 5, wherein magnesium chloride is added to the agent prepared as claimed in claim 1 in order to increase its pot life so that the agent contains up to 2% by weight of magnesium chloride.

7. A process as claimed in any of claims 1 to 6, wherein an aqueous dispersion of an acrylate or methacrylate polymer or copolymer is mixed into the agent prepared as claimed in claim 1.

8. A process for impregnating cellulose-containing fibers such as paper, which comprises using an impregnating agent prepared as claimed in any of claims 1 to 7.

## Claims (Claims for the following Contracting State(s): ES)

1. A process for the preparation of an agent for impregnating cellulose-containing fibers on the basis of an aqueous solution of, as an impregnating resin, a melamine/formaldehyde condensate which is at least partially etherified with alcohol, which comprises reacting a solution, which takes up not more than 50% by weight, based on the amount of resin, of water without forming two phases, of a formaldehyde/melamine condensate (A) which is etherified by reacting its alkaline aqueous solution with methanol and in which from 4.5 to 6 hydrogen atoms of the melamine are substituted by N-methoxymethyl groups is reacted with at least 1 mol, per mole of the condensate, of a water-soluble dihydric or trihydric alcohol (B) at from 50 to 100°C at an acidic pH until the formation of an infinitely water-miscible state of the solution in which the resin forms a clear solution with water in any mixing ratio.

2. A process as claimed in claim 1, wherein the solution of the condensate (A) is reacted with ethylene glycol, diethylene glycol, triethylene glycol or glycerol as the alcohol (B).

3. A process as claimed in claim 1, wherein the reaction with the alcohol (B) is effected at an acidic pH of from 3.0 to 6.5.

4. A process as claimed in any of claims 1 to 3, wherein a wetting agent is added to the agent prepared as claimed in claim 1.

5. A process as claimed in any of claims 1 to 4, wherein an acidic aminoplast curing agent is added to the agent prepared as claimed in claim 1.

6. A process as claimed in any of claims 1 to 5, wherein magnesium chloride is added to the agent prepared as claimed in claim 1 in order to increase its pot life so that the agent contains up to 2% by weight of magnesium chloride.

7. A process as claimed in any of claims 1 to 6, wherein an aqueous dispersion of an acrylate or methacrylate polymer or copolymer is mixed into the agent prepared as claimed in claim 1.

8. A process for impregnating cellulose-containing fibers such as paper, which comprises using an impregnating agent prepared as claimed in any of claims 1 to 7.

## Revendications (Revendications pour l'(les) Etat(s) contractant(s) suivant(s): AT, BE, CH, DE, FR, GB, IT, LI, NL, SE)

1. Procédé de préparation d'une composition destinée à l'imprégnation de matières fibreuses contenant de la cellulose, à base d'une solution aqueuse d'un produit de condensation de la mélamine et du formaldéhyde au moins partiellement éthérifié avec un alcool, caractérisé en ce que l'on fait réagir
A - une solution qui absorbe au maximum 50% en poids d'eau, par rapport à la quantité de résine, sans former deux phases, un produit de condensation du formaldéhyde et de la mélamine éthérifié par la réaction de sa solution aqueuse alcaline avec le méthanol, dans lequel 4, 5 à 6 atomes d'oxygène de la mélamine sont substitués par des radicaux N-méthoxyméthyle, avec
B - au moins une mole par mole de mélamine du produit de condensation, d'un alcool bi- ou tri-hydroxylé, soluble dans l'eau, à 50-100°C, à une valeur de pH acide, jusqu'à la création d'un état de miscibilité à l'eau illimitée de la solution, état dans lequel la résine forme avec l'eau une solution limpide en n'importe quel rapport de mélange.

2. Procédé suivant la revendication 1, caractérisé en ce que l'on entreprend la réaction de la solution du produit de condensation (A) avec l'éthylèneglycol, le diéthylèneglycol, le triéthylèneglycol, ou la glycérine, à titre d'alcool (B).

3. Procédé suivant la revendication 1, caractérisé en ce que l'on entreprend la réaction avec l'alcool (B) à une valeur de pH acide qui fluctue de 3,0 à 6,5.

4. Procédé suivant l'une quelconque des revendications 1 à 3, caractérisé en ce que l'on ajoute un agent mouillant à la composition préparée suivant la revendication 1.

5. Procédé suivant l'une quelconque des revendications 1 à 4, caractérisé en ce que l'on ajoute encore un agent de durcissement d'aminoplaste à activité acide à la composition préparée suivant la revendication 1.

6. Procédé suivant l'une quelconque des revendications 1 à 5, caractérisé en ce que l'on ajoute encore du chlorure de magnésium à la composition préparée suivant la revendication 1, en vue d'augmenter sa durée de vie en pot, en une manière telle que la composition contienne jusqu'à 2% en poids de chlorure de magnésium.

7. Procédé suivant l'une quelconque des revendications 1 à 6, caractérisé en ce que l'on mélange encore une dispersion aqueuse d'un polymère ou d'un copolymère d'ester de l'acide acrylique ou d'ester de l'acide méthacrylique.

8. Procédé d'imprégnation de matières fibreuses contenant de la cellulose, comme le papier, caractérisé en ce que l'on utilise à cette fin une composition d'imprégnation préparée suivant l'une quelconque des revendications 1 à 7.

## Revendications (Revendications pour l'(les) Etat(s) contractant(s) suivant(s): ES)

1. Procédé de préparation d'une composition pour l'imprégnation de matières fibreuses contenant de la cellulose, à base d'une solution aqueuse d'un produit de condensation de la mélamine et du formaldéhyde partiellement éhtérifié avec un alcool, servant de résine d'imprégnation, caractérisé en ce que l'on fait réagir une solution qui absorbe au maximum 50% en poids d'eau, par rapport à la quantité de résine, sans former deux phases, un produit de condensation du formaldéhyde et de la mélamine éthérifié par la réaction de sa solution aqueuse alcaline avec le méthanol (A), dans lequel 4,5 à 6 atomes d'hydrogène de la mélamine sont substitués par des radicaux N-méthoxyméthyle, avec au moins une mole, par mole du produit de condensation, d'un alcool bi- ou trihydroxylé, soluble dans (B), à 50-100°C, à une valeur de pH acide, jusqu'à la création d'un état de miscibilité à l'eau illimitée de la solution, étant dans lequel la résine forme avec l'eau une solution limpide en n'importe quel rapport de mélange.

2. Procédé suivant la revendication 1, caractérisé en ce que l'on entreprend la réaction de la solution du produit de condensation (A) avec l'éthylèneglycol, le diéthylèneglycol, le triéthylèneglycol, ou la glycérine, à titre d'alcool (B).

3. Procédé suivant la revendication 1, caractérisé en ce que l'on entreprend la réaction avec l'alcool (B) à une valeur de pH acide qui fluctue de 3,0 à 6,5.

4. Procédé suivant l'une quelconque des revendications 1 à 3, caractérisé en ce que l'on ajoute un agent mouillant à la composition préparée suivant la revendication 1.

5. Procédé suivant l'une quelconque des revendications 1 à 4, caractérisé en ce que l'on ajoute encore un agent de durcissement d'aminoplaste à activité acide à la composition préparée suivant la revendication 1.

6. Procédé suivant l'une quelconque des revendications 1 à 5, caractérisé en ce que l'on ajoute encore du chlorure de magnésium à la composition préparée suivant la revendication 1, en vue d'augmenter sa durée de vie en pot, en une manière telle que la composition contienne jusqu'à 2% en poids de chlorure de magnésium.

7. Procédé suivant l'une quelconque des revendications 1 à 6, caractérisé en ce que l'on mélange encore une dispersion aqueuse d'un polymère ou d'un copolymère d'ester de l'acide acrylique ou d'ester de l'acide méthacrylique.

8. Procédé d'imprégnation de matières fibreuses contenant de la cellulose, comme le papier, caractérise en ce que l'on utilise à cette fin une composition d'imprégnation préparée suivant l'une quelconque des revendications 1 à 7.
